# EUROPEAN PATENT SPECIFICATION

(11) **EP 0 813 775 B1**
(45) Date of publication and mention of the grant of the patent: **08.09.1999**
(21) Application number: 96908521.6
(22) Date of filing: 08.03.1996
(51) Int. Cl.: H04B 7/185

(54) **METHOD AND APPARATUS FOR MOBILE STATION-TO-MOBILE STATION CALLS IN A MOBILE SATELLITE COMMUNICATIONS SYSTEM WITH ON-BOARD TDMA FORMAT CONVERSION**
VERFAHREN UND GERÄT ZUM RUF EINER MOBILEN STATION ZU EINER ANDEREN IN EINER MOBILEN SATELLITENKOMMUNIKATIONSANORDNUNG MIT AN-BORD-TDMA-FORMAT UMWANDLUNG
PROCEDE ET APPAREIL POUR DES APPELS DE STATION MOBILE A STATION MOBILE DANS UN SYSTEME DE COMMUNICATION PAR SATELLITES MOBILES AVEC CONVERSION DE FORMAT AMRT INTERNE

(30) Priority: 10.03.1995 US 402456
(43) Date of publication of application: 29.12.1997
(73) Proprietor: Ericsson Inc., Research Triangle Park, NC 27709 (US)
(72) Inventor: RAMESH, Rajaram, Cary, NC 27511 (US); DENT, Paul, W., Pittsboro, NC 27312 (US); REINHOLD, Stanley, L., Cary, NC 27511 (US)
(74) Representative: Norin, Klas
(86) International application number: US9602553
(87) International publication number: WO9628900

(56) References cited:
- EP-A- 0 139 034
- EP-A- 0 600 197
- WO-A-92/19050
- GB-A- 2 221 368

## Description

### FIELD OF THE INVENTION

The present invention relates to time division multiple access (TDMA) communication systems and, more specifically, to TDMA communication systems with asymmetrical TDMA frame structures.

### BACKGROUND OF THE INVENTION

Cellular telecommunications is one of the fastest growing and most demanding telecommunication applications ever. Today it represents a large and continuously increasing percentage of all new telephone subscriptions around the world.

In Europe and in North America, there are several large analog cellular systems operating such as NMT (Nordic Mobile Telephone) in the Nordic countries, TACS (Total Access Communication System) in the United Kingdom, and AMPS (Advanced Mobile Phone System) in the United States. Quality, capacity and area of coverage vary widely, but demand has outstripped estimates almost universally. To address the capacity limitations of the existing analog cellular systems, many operators are migrating to digital cellular systems. Digital cellular systems are generally dassified as either TDMA, CDMA (Code-Division Multiple Access), or hybrids thereof. TDMA systems, such as the pan-European GSM (Groupe Special Mobile, or Global System for Mobile communication) system and D-AMPS (Digital Advanced Mobile Phone System) in the United States, provide increased capacity by dividing each frequency band into time slots, multiple users being allocated a different timeslot on the same frequency. CDMA systems, on the other hand, provide increased capacity by allowing multiple users to operate simultaneously across the same frequency range through the use of orthogonal spreading codes. In the long-term perspective, cellular systems using some form of digital technology will become the universal way of communication.

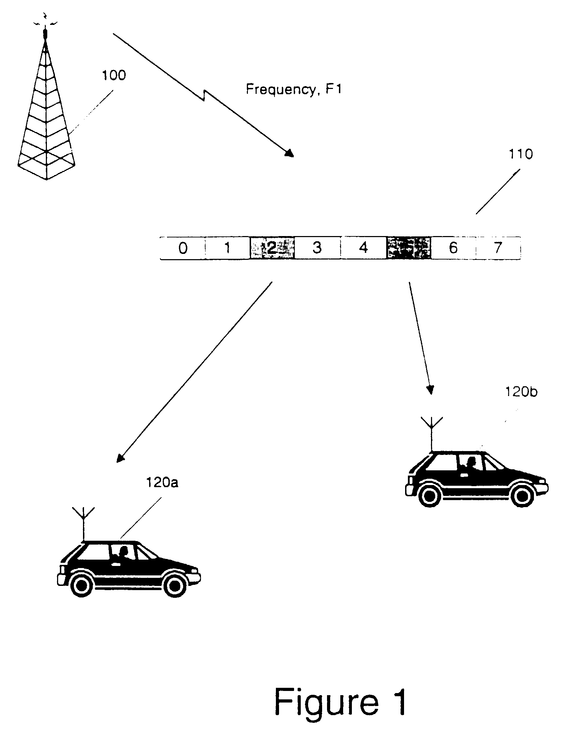

TDMA systems, such as GSM and D-AMPS, are currently the most widely deployed digital cellular systems. In GSM, for example, each frequency is divided into 8 timeslots. As shown in Figure 1, base station **100** broadcasts a signal on frequency F1 to mobile station **120a** on timeslot 2 and to mobile station **120b** on timeslot 5. Up to eight mobile stations may be accomodated on a single frequency. Signals transmitted from base station **100** to the mobile stations **120a**, **120b**, are called the downlink signals, or more simply, the downlink. For two-way communication, there must also be a corresponding set of frequencies and timeslots in the opposite direction which are called the uplink signals, or more simply, the uplink. Generally, TDMA systems employ a symmetrical frame format, that is, the TDMA frame structure (i.e., bandwidth, number of timeslots, data rates, etc.) is the same on the uplink as it is on the downlink.

Recently, there have been proposals to construct a mobile satellite communication system employing orbiting satellites in place of, or to supplement coverage from, terrestrial base stations. Generally, mobile satellite communication systems employ a satellite which is in low earth orbit (LEO), intermediate circular orbit (ICO), or geostationary earth orbit (GEO). A ground station serves as the gateway between the satellite and the public switched telephone system (PSTN), or a terrestrial cellular system. Ideally, the satellite functions as a "bent pipe", that is, the satellite is a transponder, relaying signals received from a mobile station down to a ground station and, similarly, relaying signals received from the ground station to the mobile station. Often, a frequency translation in the satellite is required as communications between the ground station and the satellite occur across a different frequency range *(e.g.* C-band, Ku-band) than do the communications between the satellite and the mobile stations *(e.g.* L-band). It is generally desirable to design the system such that the satellite has a simple architecture.

TDMA may be used to increase the capacity of communications between the satellite and the mobile stations. As mentioned, TDMA formats are generally symmetrical, that is, the uplink and the downlink have the same TDMA timeslot structure. However, for reasons of performance, the uplink TDMA structure could be different than that of the downlink TDMA structure, that is, the bandwidth, number of timeslots, and data rates may differ significantly between the uplink and downlink.

Where mobile station to mobile station communications are required, passing through the ground station to effect the mapping between asymmetric TDMA formats results in unacceptable time delays. Normally, in an ICO system, the time delay experienced in a connection between the PSTN, or terrestrial cellular network, and a mobile station in communication with the satellite is on the order of 400 milliseconds, which is perceptible to the users, but not quite a hinderance to normal conversation. Where a link between two mobile stations is effected through the ground station, the delay can be as much as 1.2 second which results in an unacceptable hindrance to normal conversation.

Some satellite repeaters in TDMA communications systems process received signals in one TDMA format and transmit signals in another TDMA format. For example, EP-A-0 139 034 discloses a method for transmitting communications services via satellites where the satellite is equipped with a plurality of receiving and transmitting units which can be selectively connected to one another via a switching matrix. Each transmitting unit in the satellite has a demodulator which initially demodulates the received signal received from the switching matrix, and stores that information in a memory. Thereafter, the demodulated information is read out from that memory continuously at a lower bit rate than demodulated signal information had been written into that memory. The lower bit rate information read out from memory is then remodulated in a modulator before being frequency upconverted and retransmitted via an antenna. GB 2 221 368 uses a dual port RAM to rearrange time slots of an incoming TDMA frame to generate a sequence in an outgoing frame.

The difficulty with such an approach is a separate demodulator and modulator are required for each channel or carrier frequency. This is undesirable for a number of reasons including increased cost, increased hardware, increased complexity, increased volume taken up in the satellite, and increased weight added to the satellite. What is needed is a solution that maps uplink signals having a first TDMA format to downlink signals having a second TDMA format without demodulating, storing, and demodulating.

### SUMMARY OF THE INVENTION

The aforementioned problem of reducing the time delay in a mobile satellite communications system is solved in accordance with the present invention.

A method is presented in which a satellite is conditioned to map uplink signals having a first TDMA format which are received from a mobile station to downlink signals having a second TDMA format for transmission to another mobile station.

A first mobile station transmits a first signal to a satellite, the first signal having a first TDMA format. The satellite receives the first signal and downconverts the first signal to produce a first IF signal having a first bandwidth, BW. The first IF signal is sampled by an analog to digital converter at a rate of N x BW where N is an integer greater than or equal to 2 to produce an input bitstream. the input bit stream is coupled to a buffer which receives and stores the input bit stream. The buffer clocks a bit stream out at a rate M x N X BW, where M is an integer value greater than 1 to produce an output bitstream with a bandwidth equal to M x BW and a second TDMA format. The output bitstream is coupled to a low pass filter, upconverted and rebroadcast as a second signal, having a second TDMA format, to a second mobile station.

These and other features and advantages of the present invention will be readily apparent to one of ordinary skill in the art from the written description when read in conjunction with the drawings in which like reference numerals refer to like elements.

### Brief Description of the Drawings

An exemplifying embodiment of the invention will now be described in more detail with reference to the accompanying drawings, in which:
**Figure 1** illustrates the downlink of a terrestrial TDMA cellular communications system;
**Figure 2** illustrates a mobile satellite communication system in which the present invention may be advantageously employed;
**Figure 3** illustrates a mobile station-to-mobile station communications link in a mobile satellite communications system;
**Figure 4** is a block diagram of satellite 200 illustrating in detail the circuits for for converting a first TDMA format to a second TDMA format; and
**Figure 5** is a block diagram illustrating in greater detail the function of the elastic buffer.

### DESCRIPTION OF THE INVENTION

In the following description, for purposes of explanation and not limitation, specific details are set forth, such as particular circuits, circuit components, techniques, etc. in order to provide a thorough understanding of the invention. However it will be apparent to one of ordinary skill in the art that the present invention may be practiced in other embodiments that depart from these specific details. In other instances, detailed descriptions of well-known methods, devices, and circuits are omitted so as not to obscure the description of the present invention with unnecessary detail.

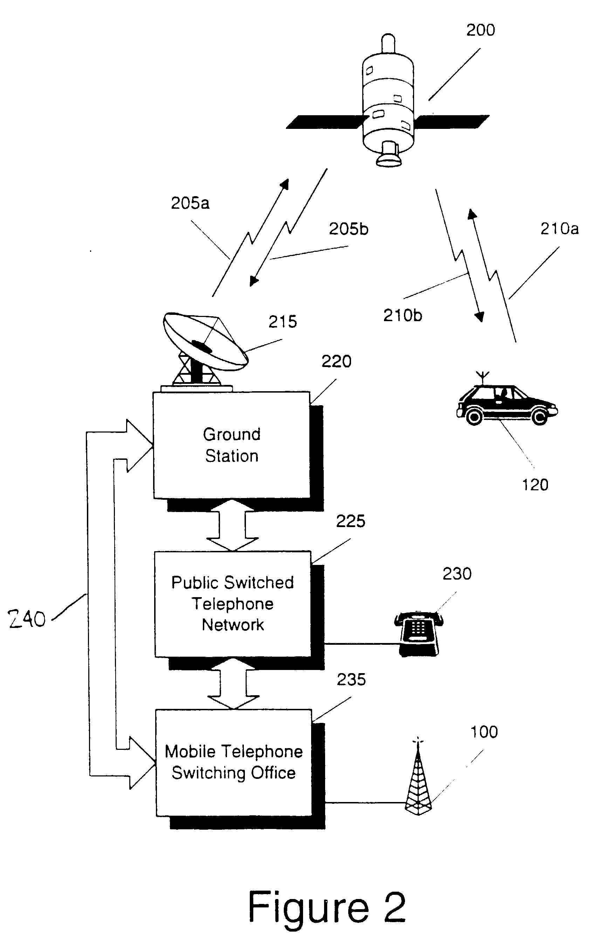

In Figure 2 is shown a mobile satellite communications system. In the present invention, satellite **200** is situated in an intermediate circular orbit (ICO) *(i.e.,* approximately 10,000 kilometers above the earth.) Feeder links **205a** and **205b** are transmitted to, or received from, satellite **200** via dish antenna **215** which is part of ground station **220**. Ground station **220** functions as a gateway between satellite **200** and the public switched telephone network (PSTN) **225**, or mobile telephone switching office (MTSO) **235**. Access to MTSO **235** may be effected through PSTN **225** or directly to ground station **220** through a dedicated link **240**. PSTN **225** routes calls to the landline telephone network in the usual manner and calls to cellular telephones are effected through MTSO **235** in the usual manner.

Satellite **200** is intended to provide coverage to mobile users **120** who are located beyond the coverage area of the terrestrial cellular network **100**. Mobile station **120** may be a car-mounted cellular telephone as shown in Figure 2, a hand-held cellular telephone, a wireless modem installed in a laptop computer, or generally any radio communications device.

In the following, telephone calls, communication links, calls, data links, links and conversations, all refer to the establishment of a communications link over which voice, data, video, or any other information may be exchanged. The originator of a call refers to the device from which a call is initiated, and the receiver of a call refers to the device with which the originator wishes to communicate. With regard to the flow of information during a call, the forward uplink refers to the uplink to the satellite from the originator of the call; the forward downlink refers to the downlink from the satellite to the receiver of the call; the reverse uplink refers to the uplink back to the satellite from the receiver of the call; and reverse downlink refers to the downlink from the satellite back to the originator of the call.

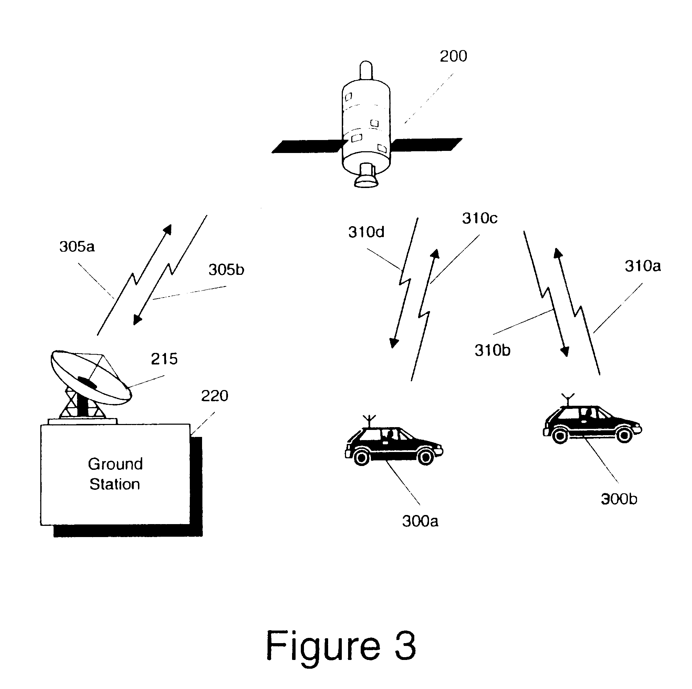

Telephone calls which originate from PSTN **225** or MTSO **235** are routed to ground station **220** where they are processed and subsequently transmitted to satellite **200** via forward uplink **205a** according to known techniques. Satellite **200** receives forward uplink **205a** and frequency translates the forward uplink to another frequency/format which is then transmitted to mobile station **120** over forward downlink **210b**. Frequency translation is usually required because the forward uplink and forward downlink usually operate in different frequency ranges. In this embodiment, for example, forward uplink **205a** is transmitted to satellite **200** in C-band; forward downlink **210b** is transmitted from satellite **200** in L-band; reverse uplink **210a** is transmitted from mobile station **120** in L-band; and reverse downlink **205b** is transmitted from satellite **200** in C-band. Signals transmitted from mobile station **120** over reverse uplink **210a** are received by satellite **200** which, as before, frequency translates and re-formats the reverse uplink signal for transmission to ground station **200** over reverse downlink **205b**. With an ICO satellite, the propagation delay between ground station **220** and mobile station **120** (and vice-versa) is on the order of 400 milliseconds. It is obvious to one skilled in the art that a mobile satellite communications system as illustrated in Figure 3 may comprise several ground stations **220**, more than one satellite **200**, and hundreds, or thousands, of mobile stations **120**.

The mobile satellite communications system may employ a TDMA format similar to that shown in Figure 1. Indeed, so that existing hardware may be re-used, it is advantageous to employ a TDMA format which is compatible with existing digital cellular systems. Use of a GSM format, for example, on the forward downlink **210b** allows mobile station **120** to re-use the existing IF (intermediate frequency) receiver circuits and A/D (analog to digital) converters with minor modification for communication with satellite **200**. For the present invention, a GSM format with 200kHz channel spacings and 32 or 16 timeslots per TDMA frame is employed. By having a variable timeslot architecture, the forward downlink **210b** can accommodate two different speech coder rates *(i.e.,* 4 kbps, or half-rate GSM), or alternatively two different channel coding rates *(i.e.,* 1/3, or 2/3).

On the reverse uplink **210a**, use of the downlink TDMA format is precluded due to peak transmit power limitations of mobile stations, particularly battery-operated, hand-held mobile stations. For reasons of user safety and to prolong battery life, the peak power transmitted on reverse uplink **210a** is desired to be less than 2 Watts with an average power of approximately 250 milliWatts to 500 milliWatts With a peak power of 2 Watts, the duty cycle needed to achieve the aforementioned average powers is easily calculated to be 0.125 to 0.25 respectively which results in an 8/4 timeslot TDMA frame structure. Therefore, an asymmetrical TDMA format is advantageously used in the present invention. To assist in synchronization between forward downlink **210b** and reverse uplink **210a**, and to keep the overall system complexity as low as possible, the bandwidth of the reverse uplink **210a** is an integer fraction of the bandwidth of the forward downlink **210b**. The present invention therefore employs a 50kHz bandwidth on the reverse uplink **210a**. In the following the downlink TDMA format refers to 200kHz channels spacings having a 32/16 timeslot TDMA frame, whereas the uplink TDMA format refers to 50kHz channel spacings having a 8/4 timeslot TDMA frame.

In addition to calls originating from, or terminating in, PSTN **225** or MTSO **235**, the mobile satellite communication system must also be able to provide mobile station-to-mobile station communications. One method of providing mobile station-to-mobile station communication in a mobile satellite communication system using an asymmetrical TDMA format requires use of ground station **220** to perform the mapping from the uplink TDMA format to the downlink TDMA format. For example, referring to Figure 3, if mobile station **300b** is the originator and mobile station **300a** the receiver of a call, mobile station **300b** transmits over forward uplink **310a** using the uplink TDMA format. Satellite **200** frequency translates forward uplink **310a** and broadcasts forward downlink **305b.** Forward downlink **305b is** received by ground station **220** where the uplink TDMA format is mapped to the downlink TDMA format and broadcast back to satellite **200** over reverse uplink **305a**. Satellite **200** frequency translates the reverse uplink **305a** and broadcasts reverse downlink **310d** to mobile station **300a** using the downlink TDMA format. The cumulative propagation delay between mobile station - to satellite - to ground station - back to satellite - and down to mobile station may be as much as 1 second including the processing and propagation delays through ground station **220**. Such a lengthy delay is unacceptable for two way voice communication.

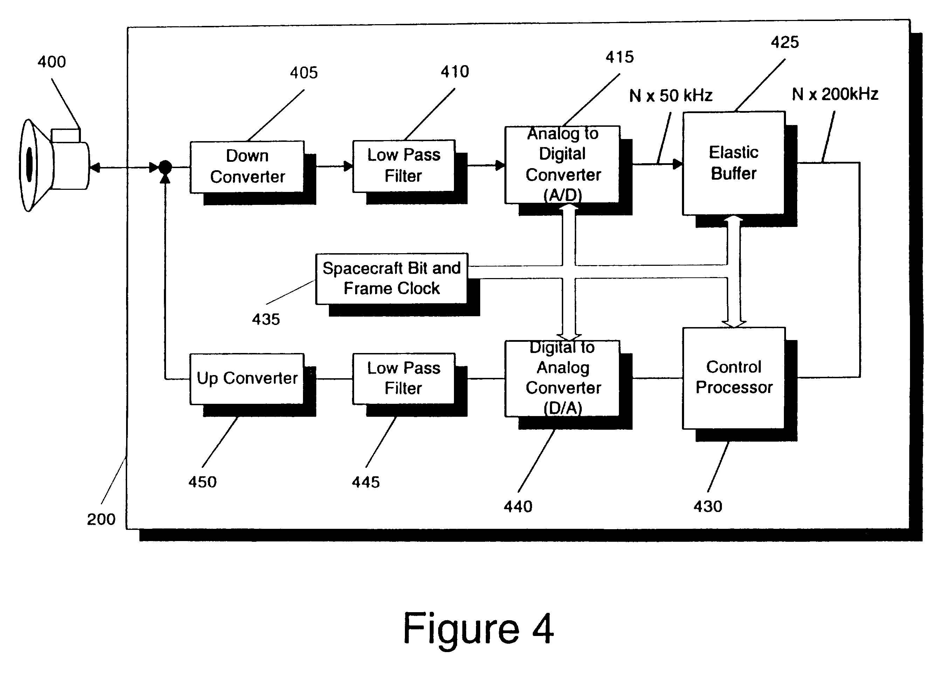

In the present invention, the mapping from the uplink TDMA format to the downlink TDMA format is performed in satellite **200**. For example, if mobile station **300b** is the originator and mobile station **300a** the receiver of a call, mobile station **300b** broadcasts forward uplink **310a** using the uplink TDMA format to satellite **200**; satellite **200** processes the forward uplink signal as shown in Figure 4 which converts the uplink TDMA format to the downlink TDMA format and broadcasts forward downlink **310d** using the downlink TDMA format to mobile station **300a**. Similarly, mobile station **300a** broadcasts reverse uplink **310c** using the uplink TDMA format to satellite **200**, satellite **200** processes the reverse uplink as shown in Figure 4 which converts the uplink TDMA format to the downlink TDMA format and broadcasts reverse downlink **310b** using the downlink TDMA format to mobile station **300b**. By mapping the uplink TDMA format to the downlink TDMA format in satellite **200**, the round trip delay can be more than cut in half over the aforementioned method of providing mobile station-to-mobile station communications via ground station **220**.

The apparatus for mapping the uplink TDMA format to the downlink TDMA format is shown in Figure 4 which is a more detailed illustration of satellite **200**. Satellite **200** comprises, inter alia, antenna **400** which, in this example is an L-band antenna, and processing circuitry for effecting the conversion from uplink TDMA format to downlink TDMA format. Satellite **200** may also have a separate C-band antenna (not shown) for communicating the ground station **220**, attitude control circuitry (not shown), solar panels and/or batteries (not shown), and various other spacecraft management circuits.

Referring to the mobile station-to-mobile station communications link shown in Figure 3 where mobile station **300b** is the originator and mobile station **300a** the receiver of a call, forward uplink **310a** is received at satellite **200** by antenna **400**. Forward uplink is, as previously mentioned, an L-band signal having 50kHz (i.e., BW is 50 kHz) channel spacing and 8/4 timeslots. Referring to Figure 4, the received forward uplink signal is coupled to downconverter **405** which filters, amplifies, and mixes the received signal to produce a first IF signal according to known techniques. The first IF signal is passed through a 50 kHz anti-aliasing low-pass filter **410** and coupled to A/D converter **415** where the first IF is sampled at a sampling rate of N x BW. Preferably, the integer N is greater than 2, so the first IF is being oversampled. The IF samples are coupled to elastic buffer **425** which may be a shift register. The IF samples are then clocked out of elastic buffer **425** as output samples at rate of N x M x BW, where M is an integer. In the present embodiment M=4, which is the ratio between the uplink TDMA format (8/4 timeslots) and the downlink TDMA format (32/16 timeslots). The output samples are coupled to control processor **430** which may add additional overhead bits to the output bit stream to produce the downlink bit stream. The downlink bitstream is coupled to A/D converter **440** and low pass filtered in low pass filter **445** which produces an analog downlink signal. The analog downlink signal is upconverted to L-band in upconverter **450** according to known techniques and broadcast as the forward downlink **310d** to mobile station **300a.**

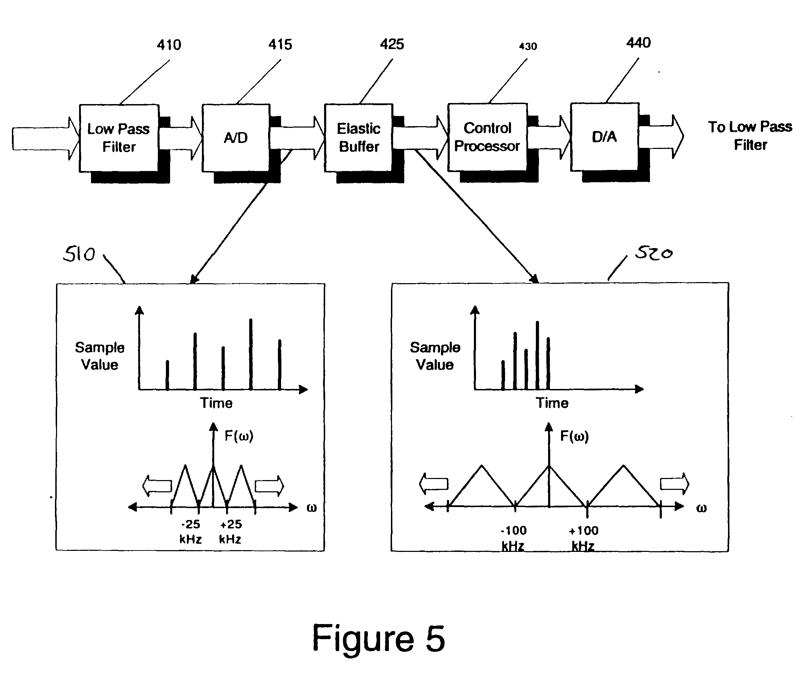

The function of elastic buffer **425** is illustrated in greater detail in Figure 5. After downconversion in downconverter **405,** the 50kHz signal is coupled to anti-aliasing low pass filter **410** whose output is coupled to A/D converter **415.** A/D converter samples the 50 kHz signal at N x 50 kHz, where N is greater than or equal to 2. The time and frequency spectrum of the output of A/D converter **415** is shown in illustration **510**. Elastic buffer, which may be a simple shift register, receives the output samples which are stored and clocked out at, for example, 4 times the rate of the input (i.e., M=4). The time and frequency spectrum of the output of elastic buffer, shown in illustration **520**, is coupled to control processor **430**. The control processor allows satellite **200** to add additional information to bitstream such as SACCH messages. The output of control processor **430** is coupled to D/A converter **440**, low pass filtered, upconverted, and broadcast by antenna **400**. The use of a shift register, or elastic buffer **425**, allows satellite **200** to map the uplink TDMA format to the downlink TDMA format without demodulating and re-modulating.

## Claims

1. A method, in a mobile satellite communications system, for providing communications via an orbiting communications satellite relay station between a first mobile station (300b) conditioned to transmit a first TDMA signal format and a second mobile station (300a) conditioned to receive a second TDMA signal format, the method including transmitting a first signal having a first TDMA format and a first bandwidth from the first mobile station to the satellite (200), and receiving in the satellite the first signal using a receiver adapted to receive the bandwidth, characterized by the further steps of:
sampling the first received signal at a first rate generating a first bitstream having a first number of samples per second;
storing in a buffer (425) the first bitstream;
clocking out of the buffer (425) the first bitstream;
clocking out of the buffer the first bitstream at a second different rate to produce a second bitstream having a second number of samples per second, the samples in both the first and second bitstreams being representative of the received first signal;
filtering the second bitstream to produce an output signal having a second different bandwidth; and
transmitting from the satellite to the second mobile station the output signal using the second TDMA format.

2. A mobile satellite communications system for providing communications between a first mobile station conditioned to transmit a first TDMA format and a second mobile station conditioned to receive a second TDMA format including a first mobile station (300b) conditioned to transmit a first signal having a first TDMA format and a first bandwidth BW, a second mobile station (300a) conditioned to receive a second signal having a second TDMA format and a second bandwidth M x BW, a receiver in the satellite (200) for receiving the first signal, and a transmitter for transmitting an output signal from the satellite to the second mobile station using the second TDMA format, further characterized by:
an analog to digital converter (415) for sampling the received first signal at a rate N x BW, where N is an integer greater than or equal to 2, to produce a first bitstream having at least N x BW samples per second;
a buffer (425) for receiving the first bitstream and clocking out the first bitstream at a rate M x N x BW, where M is an integer greater than or equal to 2 to produce a second bitstream having at least M x N x BW samples per second, the sample being in both the first and second bitstreams representative of the received first signal; and
a low pass filter (445) for filtering the second bitstream to produce an output signal having a bandwidth M x BW.

3. The mobile satellite communications system of claim 2, where said buffer is a shift register.

4. The mobile satellite communications system of claim 2, where said second TDMA format is a GSM format.

5. The method according to claim 1, wherein the first bandwidth is less than the second bandwidth.

6. The method in claim 1, wherein the first rate at which the received first signal is sampled is less than the second rate at which the first bitstream is clocked out of the buffer.

7. The method of claim 1, wherein a number of time slots in the first TDMA format and the second TDMA format varies with different frames.

8. The method of claim 1, wherein the first rate is N x BW where N is an integer greater than or equal to 2 and BW is bandwidth and the second different rate is M x N x BW where M is an integer greater or equal to 2.

9. The mobile satellite communications system of claim 2, wherein a number of time slots in the first TDMA format and the second TDMA format vary with different frames.

## Patentansprüche

1. Verfahren in einem Mobilsatellitenkommunikationssystem zur Bereitstellung von Kommunikationsvorgängen über eine Relaisstation eines umlaufenden Kommunikationssatelliten zwischen einer ersten Mobilstation (300b), die so ausgebildet ist, daß sie ein erstes TDMA-Signalformat sendet, und einer zweiten Mobilstation (300a), die so ausgebildet ist, daß sie ein zweites TDMA-Signalformat empfängt, wobei das Verfahren das Senden eines ersten Signals mit dem ersten TDMA-Format und einer ersten Bandbreite von der ersten Mobilstation an den Satelliten (200) umfasst, und den Empfang des ersten Signals in dem Satelliten unter Verwendung eines Empfängers, der zum Empfang der Bandbreite ausgebildet ist, gekennzeichnet durch folgende weitere Schritte:
Abtasten des ersten empfangenen Signals mit einer ersten Rate zur Erzeugung eines ersten Bitstroms, der eine erste Anzahl an Abtastwerten pro Sekunde aufweist;
Speichern des ersten Bitstroms in einem Puffer (425);
taktweises Ausgeben des ersten Bitstrom aus dem Puffer (425);
taktweises Ausgeben des ersten Bitstroms aus dem Puffer mit einer zweiten, unterschiedlichen Rate, zur Erzeugung eines zweiten Bitstroms, der eine zweite Anzahl an Abtastwerten pro Sekunde aufweist, wobei die Abtastwerte sowohl in dem ersten als auch in dem zweiten Bitstrom das empfangene erste Signal representieren;
Filtern des zweiten Bitstroms zur Erzeugung eines Ausgangssignals, welches eine zweite, unterschiedliche Bandbreite aufweist; und
Senden des Ausgangssignals unter Verwendung des zweiten TDMA-Formats von dem Satelliten an die zweite Mobilstation.

2. Mobilsatellitenkommunikationssystem zur Bereitstellung von Kommunikationsvorgängen zwischen einer ersten Mobilstation, die zum Senden eines ersten TDMA-Formats ausgebildet ist, und einer zweiten Mobilstation, die zum Empfang eines zweiten TDMA-Formats ausgebildet ist, mit einer ersten Mobilstation (300b), die zum Senden eines ersten Signals ausgebildet ist, welches ein erstes TDMA-Format und eine erste Bandbreite BW aufweist, einer zweiten Mobilstation (300a), die zum Empfang eines zweiten Signals ausgebildet ist, welches ein zweites TDMA-Format und eine zweite Bandbreite M X BW aufweist, einem Empfänger in dem Satelliten (200) zum Empfang des ersten Signals, und einem Sender zum Senden eines Ausgangssignals von dem Satelliten an die zweite Mobilstation unter Verwendung des zweiten TDMA-Formats, weiterhin gekennzeichnet durch:
einen Analog-Digitalwandler (415) zur Abtastung des empfangenen ersten Signals mit einer Rate N X BW, wobei N eine ganze Zahl größer gleich 2 ist, zur Erzeugung eines ersten Bitstroms, der zumindest N X BW Abtastwerte pro Sekunde aufweist;
einen Puffer (425) zum Empfang des ersten Bitstroms und zur getakteten Ausgabe des ersten Bitstroms mit einer Rate von M X N X BW, wobei M eine ganze Zahl größer gleich 2 ist, zur Erzeugung eines zweiten Bitstroms, der zumindest M X N X BW Abtastwerte pro Sekunde aufweist,
wobei die Abtastwerte sowohl in dem ersten als auch in dem zweiten Bitstrom das empfangene erste Signal repräsentieren; und
ein Tiefpassfilter (425) zum Filtern des zweiten Bitstroms, um ein Ausgangssignal mit einer Bandbreite M X BW zu erzeugen.

3. Mobilsatellitenkommunikationssystem nach Anspruch 2, bei welchem der Puffer ein Schieberegister ist.

4. Mobilsatellitenkommunikationssystem nach Anspruch 2, bei welchem das zweite TDMA-Format ein GSM-Format ist.

5. Verfahren nach Anspruch 1, bei welchem die erste Bandbreite kleiner ist als die zweite Bandbreite.

6. Verfahren nach Anspruch 1, bei welchem die erste Rate, mit welcher das empfangene erste Signal abgetastet wird, kleiner ist als die zweite Rate, mit welcher der erste Bitstrom taktweise aus dem Puffer ausgegeben wird.

7. Verfahren nach Anspruch 1, bei welcher die Anzahl an Zeitschlitzen in dem ersten TDMA-Format und dem zweiten TDMA-Format bei unterschiedlichen Rahmen verschieden ist.

8. Verfahren nach Anspruch 1, bei welchem die erste Rate N X BW ist, wobei N eine ganze Zahl größer gleich 2 ist, und BW die Bandbreite, und die zweite, unterschiedliche Rate gleich M X N X BW ist, wobei M eine ganze Zahl größer gleich 2 ist.

9. Mobilsatellitenkommunikationssystem nach Anspruch 2, bei welchem die Anzahl an Zeitschlitzen in dem ersten TDMA-Format und dem zweiten TDMA-Format bei verschiedenen Rahmen verschieden ist.

## Revendications

1. Procédé, dans un système de communications mobile par satellite, pour établir des communications par l'intermédiaire d'une station relais consistant en un satellite de communications en orbite, entre une première station mobile (300b) conditionnée pour émettre un premier format de signal AMRT et une seconde station mobile (300a) conditionnée pour recevoir un second format de signal AMRT, le procédé comprenant l'émission d'un premier signal ayant un premier format AMRT et une première largeur de bande, à partir de la première station mobile, vers le satellite (200), et la réception du premier signal dans le satellite en utilisant un récepteur adapté pour recevoir la largeur de bande, caractérisé par les étapes supplémentaires suivantes :
on échantillonne le premier signal reçu à une première cadence pour générer un premier train de bits ayant un premier nombre d'échantillons par seconde;
on stocke le premier train de bits dans un tampon (425);
on émet le premier train de bits à partir du tampon (425) sous l'effet d'un signal d'horloge;
on émet le premier train de bits à partir du tampon, sous l'effet d'un signal d'horloge, à une seconde cadence différente pour produire un second train de bits ayant un second nombre d'échantillons par seconde, les échantillons dans les premier et second trains de bits étant représentatifs du premier signal reçu;
on filtre le second train de bits pour produire un signal de sortie ayant une seconde largeur de bande différente; et
on émet le signal de sortie à partir du satellite, vers la seconde station mobile, en utilisant le second format AMRT.

2. Système de communications mobile par satellite pour établir des communications entre une première station mobile conditionnée pour émettre un premier format AMRT et une seconde station mobile conditionnée pour recevoir un second format AMRT, comprenant une première station mobile (300b) conditionnée pour émettre un premier signal ayant un premier format AMRT et une première largeur de bande BW, une seconde station mobile (300a) conditionnée pour recevoir un second signal ayant un second format AMRT et une seconde largeur de bande M × BW, un récepteur dans le satellite (200) pour recevoir le premier signal, et un émetteur pour émettre un signal de sortie à partir du satellite, vers la seconde station mobile, en utilisant le second format AMRT, caractérisé en outre par :
un convertisseur analogique-numérique (415) pour échantillonner le premier signal reçu à une cadence N × BW, en désignant par N un entier supérieur ou égal à 2, pour produire un premier train de bits ayant au moins N × BW échantillons par seconde;
un tampon (425) pour recevoir le premier train de bits et pour émettre le premier train de bits, sous l'effet d'un signal d'horloge, à une cadence M × N × BW, en désignant par M un entier supérieur ou égal à 2, pour produire un second train de bits ayant au moins M × N × BW échantillons par seconde, l'échantillon étant représentatif du premier signal reçu, à la fois dans les premier et second trains de bits; et
un filtre passe-bas (445) pour filtrer le second train de bits de façon à produire un signal de sortie ayant une largeur de bande M × BW.

3. Système de communications mobile par satellite selon la revendication 2, dans lequel ledit tampon est un registre à décalage.

4. Système de communications mobile par satellite selon la revendication 2, dans lequel ledit second format AMRT est un format GSM.

5. Procédé selon la revendication 1, dans lequel la première largeur de bande est inférieure à la seconde largeur de bande.

6. Procédé selon la revendication 1, dans lequel la première cadence à laquelle le premier signal reçu est échantillonné est inférieure à la seconde cadence à laquelle le premier train de bits est émis par le tampon sous l'effet d'un signal d'horloge.

7. Procédé selon la revendication 1, dans lequel un nombre de créneaux temporels dans le premier format AMRT et le second format AMRT varie avec différentes trames.

8. Procédé selon la revendication 1, dans lequel la première cadence est N × BW, en désignant par N un entier supérieur ou égal à 2 et par BW la largeur de bande, et la seconde cadence différente est M × N × BW, en désignant par M un entier supérieur ou égal à 2.

9. Système de communications mobile par satellite selon la revendication 2, dans lequel un nombre de créneaux temporels dans le premier format AMRT et le second format AMRT varie avec différentes trames.
